# EUROPEAN PATENT SPECIFICATION

(11) **EP 1 703 733 B1**
(45) Date of publication and mention of the grant of the patent: **18.05.2011**
(21) Application number: 05460006.9
(22) Date of filing: 16.03.2005
(51) Int. Cl.: H04N 7/24

(54) **System for processing of television data streams and method for processing of television data streams**
System zur Verarbeitung Fernsehdatenströmen und Verfahren zur Verarbeitung Fernsehdatenströmen
Système de traitement de flux de données de télévision et procédé de traitement de flux de données de télévision

(43) Date of publication of application: 20.09.2006
(73) Proprietor: Advanced Digital Broadcast S.A., 1292 Pregny-Chambesy (CH)
(72) Inventor: Dabrowa, Andrzej, 65-012 Zielona Gora (PL)
(74) Representative: Hudy, Ludwik

(56) References cited:
- WO-A-02/41625
- WO-A-99/37048
- US-A1- 2002 064 189

## Description

The invention relates to a system and a method for processing television data streams in a device, which is not able to directly and simultaneously process all received streams.

The most common systems for processing television data use a single front-end input and a processor capable of decoding one television data transport stream. However the growing demand for home video distribution systems requires the processing of many television data streams simultaneously to input many, for example, reduced architecture receivers, or to feed many receivers. In most cases, it requires the processing of several television data streams by a processor capable of parallel operation, for example descrambling and demultiplexing several television data streams.

Currently on the market, processors are available capable of processing three or even five television data streams simultaneously. Systems with three tuners and a processor capable of processing three MPEG (Moving Picture Experts Group) transport streams are commonly used in DVRs (Digital Video Recorder) or PVRs (Personal Video Recorder). The most typical video recording systems are capable of processing two or three television data streams. This system allows the user to record two programmes while watching another telecast programme. However, the addition, to the processor, of an additional MPEG data decoder and other necessary modules to process an additional source stream, increases its cost dramatically.

From the US patent application No. 2004/0252833 A1 entitled "Common interface controller and method of descrambling transport stream channels" there is a recognised system, whereby an intermediate data stream is provided by multiplexing part of the first transport stream with part of the second transport stream, the part of the first stream including a first channel and the part of the second stream including a second channel, and where the original value of a PID (Packet Identifier) identifying the second channel is changed to an intermediate value not used by any PID of any respective channel in the first transport stream such that the intermediate data stream forms an intermediate transport stream for processing using a conditional access (CA) module. Such system allows for the processing, by the CA module, parts of two streams, which normally would require two CA modules. The method requires PIDs remapping before data descrambling. The remapping interferes with the second stream content, which in turn requires references to an EMM (Entitlements Management Message) and ECM (Entitlement Control Message) messages to be known i.e. the system knows where to search for the CA data. The '833 system requires that the CA Table and the EMMs of the CA system supported by the inserted conditional access module will typically be the same for all transport streams, i.e. the same as in the stream that is not being remapped. According to the system where the PID remapper modifies the PID field in a transport stream header, the corresponding PID field within the CA object conveyed via the command interface to the CA module is also modified correspondingly. The drawback of the method is that it needs to be programmed differently for each system or television network. In another words the system is network and content dependent.

From the PCT publication No. WO9937048A1 entitled "Video program bearing transport stream remultiplexer" are known a method and a system remultiplex video program bearing data. The described system uses a descriptor based system for timely outputting transport packets, a descriptor and transport packet caching technique for decoupling the synchronous receipt and transmission of transport packets from any asynchronous processing, and descriptors for managing scrambling and descrambling control words and optimizing bandwidth of transport streams by replacing null transport packets with transport packet data. Furthermore, the system uses a technique for locking multiple internal reference clock generators. The main steps of the method for optimizing the bandwidth of a transport stream are receiving a transport stream at a predetermined bit rate wherein the transport stream includes variably compressed program data bearing transport packets and one or more null transport packets, and selectively replacing one or more of said null transport packets with another to-be-remultiplexed data bearing transport packet.

From the PCT publication No. WO0156297A1 entitled "Home video distribution and storing system" there is a recognised system where the input streams are combined in a multiplexer that then aggregates all the selected programme streams for accessibility by the various TV sets in the internal network. TV and Internet signals are fed both to the local TV set and to a base station radio transceiver. The transceiver sends the desired information to the other TV sets and slave-set top boxes (SSTBs) via local antennae. The drawback of this system is that all SSTBs receive the same data. Another disadvantage is that the system is only suitable for open rather than scrambled broadcasts since the multiplexing step would cause the CA system to malfunction, because the EMM and ECM sections could not be found in the multiplexed stream because the data references cannot be preserved. The system suggests adding CA encryption before the internal multiplexing process. In this type of CA addition, the CA message placement is also known in advance since the scrambling module is a local one.

The PCT publication No. WO0241625A1 entitled "Digital television conditional access methods and apparatus for simultaneously handling multiple television programs" teaches a digital television receiving system having a security mechanism which simultaneously handles two or more separate television program signals. The system includes a plurality of digital television receiver mechanism for receiving a plurality of separate digital television program signal transport streams. The system also includes a multiplexer mechanism coupled to the digital television receiver mechanisms for tagging and multiplexing the received program signal transport streams into a single combined signal transport stream. The system further includes a demultiplexer mechanism for receiving an access-allowed combined transport stream from the security mechanism and demultiplexing the combined transport stream into separate transport streams corresponding to the separate transport streams received by the receiver mechanisms. The system also includes circuitry responsive to at least one of the demultiplexed transport streams for supplying image signals to a television display mechanism for producing television images.

It would be desirable to improve known systems, so that they can process incoming television streams, which are scrambled. Therefore, more sophisticated techniques are required for remapping PID numbers in systems containing a CA module, so that packet references are preserved at the time of descrambling, thereby allowing processing and descrambling data from various sources without knowledge of the content of the input streams. Moreover, a system is needed which is capable of processing signals from more front-ends than there are decoders and descramblers in the processing system in order to decrease the cost of the television receiver or video distribution system architecture.

It is therefore an object of the present invention to provide a system allowing for processing of at least two input television data streams received by front-ends wherein the system is capable of simultaneously descrambling and decoding lower number of television data streams than there are input television data streams received by the front-ends. Nevertheless, data from all input streams may be output by the system.

The object of the present invention is achieved with a system for processing of television data streams comprising front-ends for receiving at least two streams having original PID values, a remultiplexer for receiving the streams from the front-ends and capable of outputting a number of internal streams, and a descrambler for receiving the internal streams from the remultiplexer, where the number of the internal streams is lower than a number of the input streams, and where the internal streams are provided with internal PID values and to the remultiplexer, whereas the descrambler and the demultiplexer is connected a PID management module, to which is connected a PIDs database for storing data about PIDs relation of the input streams and the internal streams, and wherein the PID management module is capable of demapping the internal PID values to the original PID values, basing on the data about the PIDs values relation, after data of the internal streams have been processed by the descrambler and the demultiplexer. In this way the input streams may be remultiplexed, while preserving the information on mapping, which has been introduced into the internal streams. As a result there are fewer descrambling and demultiplexing means than there are the front-ends receiving input streams.

The PID management module can include means for receiving via a communication link new data notification from the demultiplexer, means for accepting requests for reception of specific data from the input streams, means for executing the remultiplexer setup by applying the remapping parameters, means for executing the descrambler setup by applying the descrambling parameters, means for executing the demultiplexer setup by applying the demultiplexing parameters, and means for executing, after receiving new data notification, the PIDs demapping in order to reply to requests for reception of specific data from the input streams.

In this way the system can manage the requests for input streams data processing while partially operating on internal streams due to lack of the descrambling and demultiplexing resources.

In a preferred embodiment the PID management module is a communication means between the demultiplexer and descrambler hardware operating on internal PIDs of the internal streams and the applications operating on original PIDs values of the input streams.

Thus the demultiplexer and descrambler operate on internal PID values while applications operate on original PID values.

It is of special advantage that the PID management module is bi-directionally connected to the PIDs database and manages the PIDs database records.

Preferably the PIDs database record comprises at least the original PID value used in the input stream, the internal PID value used in the internal stream, input stream identifier and the internal stream identifier.

In this way the mapping parameters are preserved to facilitate later demapping for the application interfaces.

Preferably means for executing the descrambler setup comprises means for mapping, according to the PIDs database, the selected PID value of the input stream to the internal PID value, used in the internal stream.

In accordance with the preferred embodiment, the new data notification, sent to the PID management module by the demultiplexer, comprises the internal PID value.

Preferably the means for accepting requests for reception of specific data from the input streams are connected via the application interface to the application layer.

The remapping parameters can comprise input stream identifier, original PID value, internal stream identifier and internal PID value.

The descrambling parameters can comprise descrambler key, internal stream identifier and internal PID value and the demultiplexing parameters can comprise internal stream identifier and internal PID value.

Another object of the present invention is to provide PIDs values mapping and demapping, so that software, operating in the system, processes data as if the system could simultaneously and directly descramble and decode all streams received from the front-ends.

According to the present invention there is provided a method for processing of television data streams according to which the front-ends are receiving at least two streams. The streams are output to a descrambler, and then to a demultiplexer. The method includes accepting requests for reception of specific data from the input streams, remultiplexing the streams received from the front-ends into an output number of internal streams, where the output number is lower than an input number of streams received from the front-ends wherein the remultiplexing executes necessary PIDs remapping, storing data about PIDs relation in the input and the internal streams, processing the internal streams in the descrambler and the demultiplexer capable of processing the output number of the input streams using a PID management module having access to the data about the PIDs values relation of the input streams to the internal streams, and demapping PIDs values in order to reply to requests for reception of specific data from the input streams.

It is of special advantage that the PIDs relation is stored in the PIDs database and a database record and is used to accept requests for reception of specific data from the input streams, remove of an original PID value from processing, process data when data are received in the internal stream from the demultiplexer, setup the demultiplexer, setup the descrambler and demap PIDs values.

In accordance with the preferred embodiment, the PIDs database record comprises at least the original PID value used in the input stream, the internal PID value used in the internal stream, the input stream identifier and the internal stream identifier.

Preferably the remultiplexer and PIDs remapping are controlled by the PID management module.

Preferably the setup of the descrambler and the setup of the demultiplexer are executed after mapping the selected input stream identifier and original PID value into internal stream identifier and internal PID value.

Preferably accepting requests for reception of specific data from the input streams comprises the steps of checking whether the requested original PID value is currently present in the PIDs database whereas if the PID value record is already present the procedure ends and in the opposite case, determining on which internal stream the system will await the requested data, checking whether the original PID value requested is already present in the internal stream wherein if the value is not present in the internal stream, the database is updated with a new record where the internal PID value equals the original PID value and in the opposite case, when the selected original PID value is present in the internal stream, remapping PID value requested, setting the remultiplexer for the remapping according to the found value and storing information about PIDs relation in the PIDs database.

The removal of an original PID value from processing can comprise the steps of requesting from the PID management module to remove the selected original PID value from data retrieval list and PIDs database, switching the remultiplexer off for the selected original PID value and deleting the PID value record from the PIDs database.

Preferably data processing when data are received in the internal stream from the demultiplexer comprises the steps of reading the incoming data, searching for the PID reference in the PIDs database and in case the original PID value is different from the internal PID value searched for, restoring the original PID value, finding the input stream, from which the received data has been read and passing the data to the selected application interface for further processing.

Preferably the descrambler setup comprises the steps of requesting to set key on the descrambler for the original PID value in the input stream, querying the PIDs database and setting the key on the descrambler associated with the internal stream for the internal PID value defined by the PIDs database record.

Preferably the demapping of PIDs values is followed by extracting descrambling keys for the internal data streams.

The present invention allows for cost reductions in the television signal receivers and home multimedia distribution servers, provides seamless data processing at the applications level, requires minimal changes in the present systems hardware and software architecture and allows for descrambling of remultiplexed television data streams regardless of the CA type and CA messages placement in the stream.

The invention will now be described by way of example and with reference to the accompanying drawings in which:
Fig. 1 shows details of processing system architecture;
Fig. 2 shows a procedure to add a PID request to a system;
Fig. 3 shows a procedure to remove a PID request from a system;
Fig. 4 shows a response procedure to requested data reception;
Fig. 5 shows complete video distribution system architecture comprising a master and slave set-top boxes;
Fig. 6 shows a typical scenario of resources allocation among master and slave set-top boxes; and
Fig. 7 shows a descrambler setup process.

The invention will be described in detail with reference to an MPEG stream processing system.

In the following description the term *input stream* means a television stream received by the remultiplexer from one of the front-ends, the term *original PID* means a PID value used in one of the input streams, the term *internal stream* means a stream output by the remultiplexer and fed into the descrambler and the demultiplexer and the term *internal PID* means a PID present in the internal stream.

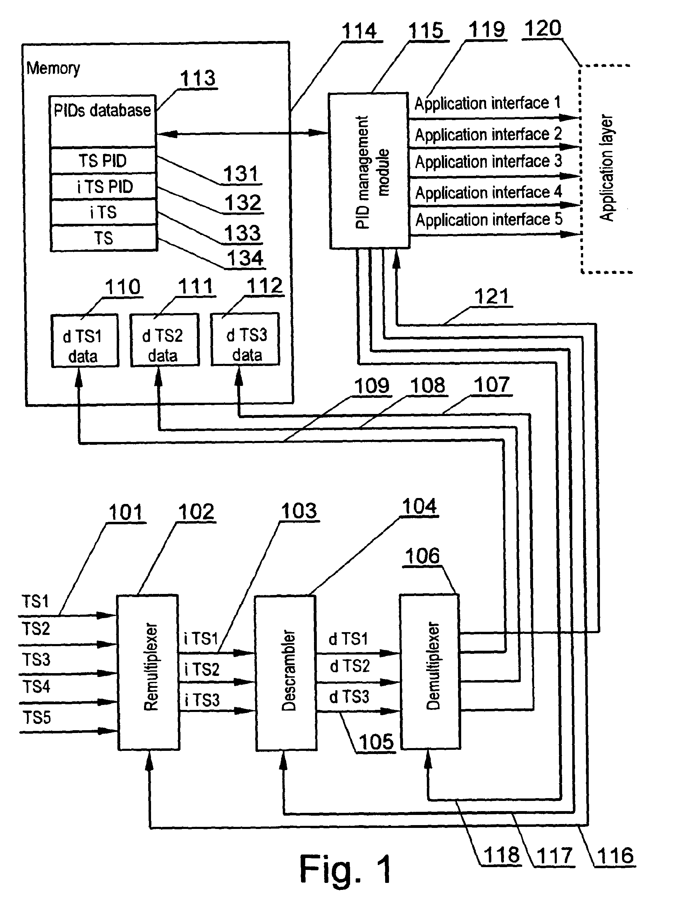

The television signal receiver, shown in Fig. 1, is equipped with five front-ends, for example of DVB-S2 type. The front-ends receive five MPEG transport streams TS1...TSS 101. The processor, comprising a descrambler 104 and a demultiplexer 106, used in the receiver, for example an STi710x device, is capable of processing only three transport streams (TS) inputs, therefore it is necessary to add a remultiplexer 102 between the front-ends and a unit consisting of the descrambler 104 and demultiplexer 106.

The remultiplexer 102, according to the invention, must be able to filter five input DVB-S2 TSs simultaneously and output up to five selected channels in three internal transport streams iTS1... iTS3 103. The internal iTSs 103 preferably contain only the channels selected for viewing or recording by the video distribution system receivers included in the suggested architecture. The remultiplexer 102, shown in Fig. 1 can, for example, process data according to fixed rules. The remultiplexing rules may define that TS1 and TS2 will be remultiplexed into iTS1, TS3 and TS4 will be remultiplexed into iTS2 and the TS5 will be sent directly as iTS3.

It shall be noted that a single transport stream will typically contain 4, 5, 6 or more channels, wherein each channel typically consists of a combination of video, audio and possibly other data i.e. additional channel components. The selected channels shall retain all their individual components, applications and PSI/SI (Program Specific Information/Service Information) data. The system's application 120 will select all original PIDs on specific remultiplexer's input 101 that are necessary to decode the selected channel. This includes all components' PIDs listed in PMT (Program Map Table) but also PSI, DVB Sl (Digital Video Broadcasting), MHP (Multimedia Home Platform) applications and any received software updates.

The remultiplexer 102 is controlled by a PID management module 115 via a communication link 116, for example an l2C interface. The PID management module 115 constantly monitors the PID values used in a given internal iTS 103 and selects new values for the original PIDs, based on the current state of the processed internal stream. The internal PIDs values and their original values are stored in the PID database 113 stored in the memory 114. The PIDs database 113 is used by the PID management module 115 to control the remultiplexer 102, to set up the descrambler 104 (via the 117 communication link), to setup the demultiplexer 106 (via the 118 communication link) and for PID restoration for the descrambler 104 setup and the applications layer 120. The remultiplexer 102 is able to filter selected original PID packets on a selected input stream 101 and feed them to a selected internal iTS stream 103 - the PID value may be replaced during this operation if there is a conflict with other PID values indicated by the PID database's 113 records.

It shall be noted that different transport streams usually use overlapping, or identical PID values. Hence, merely multiplexing the channel packets of different transport streams will usually result in different channels being identified with the same or overlapping PID values. This makes it impossible to differentiate the channels.

Therefore, it is necessary to remap PIDs when merging several input TSs 101 into one of internal iTS 103 in order to avoid PID value-conflicts. Such an operation may influence some PID connections hidden within other data, for example PSI or CA descriptors. Due to this, the PID management module 115 emulates five application interfaces 119 and automatically performs PID demapping (procedure opposite to remapping), returning them to the original values stored temporarily in the PID database 113. Each application interface 119 corresponds to one input stream 101.

The applications module 120 processes data as if it had been received on five TSs by the descrambler 104 and the demultiplexer 106, having original PIDs as in the input TSs 101, in the same way as if the processor, typically comprising the modules 104 and 106, could process five input streams. If an application needs to retrieve and process specific data, it requests the data, via the two-way application interface 119, from the PID management module 115. After finding the requested data in one of the internal transport streams 105 (the difference between the internal streams 103 and the internal transport streams 105 being that at least some of the data present in the streams 103, in case of scrambled streams, will be descrambled in the streams 105), it passes it to the application via the same interface. In order to find requested data in one of the dTSs 105 the PID management module 115 consults the database 113 to check streams 101 and 103 relation and if any mapping is necessary i.e. whether the requested packets PIDs have been assigned different values in the internal iTS 103 and dTS 105.

In the system shown in Fig. 1 it is assumed that the front-ends are already tuned correctly and receive proper data from the input streams. The procedure of channel tuning in the system described will be obvious to one skilled in the art, as it requires only the additional steps of resetting the remultiplexer and the database for the selected input stream.

It is preferable that the remapping algorithm does not assign (at least for a predefined period of time) the remapped PIDs values that were used in the previous internal stream to avoid a situation where the system processes packets having the same PID values but belonging to different channels.

The typical PID database 113 record as shown in Fig. 1 comprises at least four fields 131, 132, 133 and 134. The first field is the original PID value 131 as received in the TS 101, the second field is the internal PID value 132 as fed into the iTS 103 and dTS 105 internal streams, which can replicate the original PID value if no remapping is necessary. The third value 133 is the identifier of the internal iTS stream interface from 1 to 3 according to Fig. 1 and the last value 134 is the identifier of the input stream interface from 1 to 5 according to Fig. 1. Typically each input stream interface corresponds to one application interface 119.

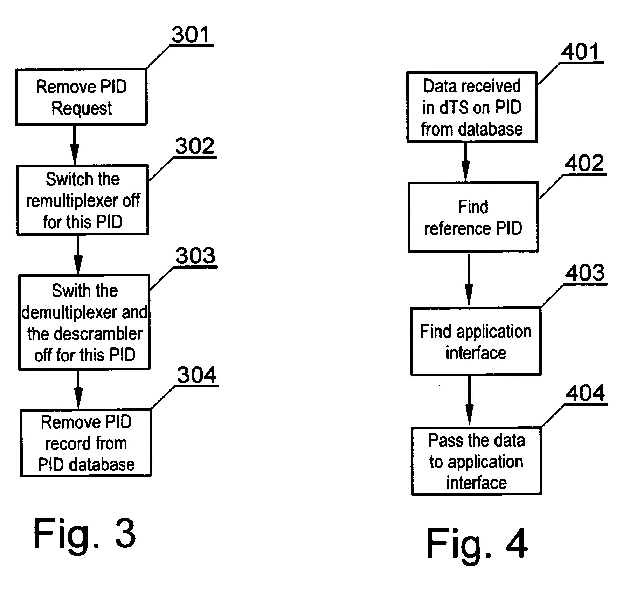

Additionally, as known from the prior art, the PID management module 115 may store in the memory 114, which application's 120 function shall be called when new data notification is received. The new data notification is the information sent, via communication link 121, when the demultiplexer 106 notifies the PID management module 115 that new data has been stored in one of the transport streams data buffers 110, 111, 112 created in the memory 114. The received data is transmitted by the demultiplexer to the memory buffers 110, 111 and 112 via the communication links 107, 108 and 109. The information about the new data notification can also be stored in the memory 114. The parameters, sent by the demultiplexer 106 upon new data notification, will be used upon the application's 120 function call initiated at the end of the procedure shown in Fig. 4. The data referring to the function call and new data notification can also be stored in the PIDs database 113.

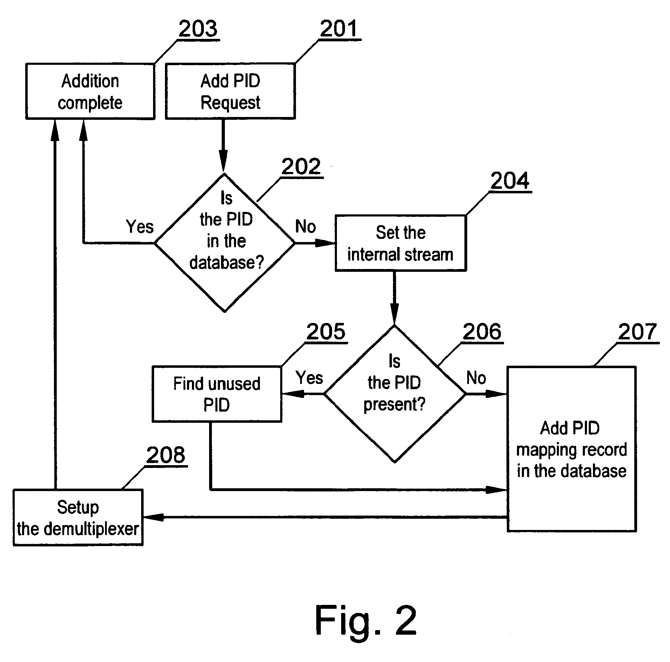

Fig. 2 shows the procedure for inputting a PID reception request to the system. This means a request to receive data from selected input stream packets identified by a given original PID value. The first step 201 is to request an original PID number addition to the data filters. The application operating on one of the application interfaces 119 requests the PID management module 115 to retrieve specific data. The next step 202 is to check whether the specified original PID number is currently present in the PIDs database 113 records. If the data under the PID number is already filtered, then the procedure ends at step 203 since no addition is necessary. If data under the original PID number is not scheduled to be filtered, the procedure moves to step 204, where the system determines on which internal dTS 105 stream the system, in particular the programmed demultiplexer 106, will await the requested data.

The next step 206 is to check whether the original PID value requested is already present in the selected internal dTS stream 105. If the value is not contained in the stream the procedure moves to step 207. Conversely, if the selected original PID value is present in the internal stream, the procedure moves to step 205 in order to find an unused internal PID value for the remapping procedure. The remultiplexer's 102 registers are set for the remapping according to the found value in order for the system to start processing the data. The remapping parameters, which are sent to the remultiplexer 102 from the PID management module 115, are the input stream identifier, the original PID value, the internal stream identifier and the internal PID value. The next step 207 is to store information about the requested PID values in the PIDs database 113. The PIDs database stores information about relationship between the original and internal PID values and the streams, where the values can be found. The last step 208 is to setup the demultiplexer 106 with the internal PID and internal stream identifier. Additional data can also be passed to the demultiplexer during the setup for a new internal PID value.

Fig. 3 shows the procedure for the removal of a PID request from the system. The first step 301 is to request an original PID number removal from the data filters. The application, operating on one of the application interfaces 119, requests the PID management module 115 to remove the selected original PID value from the data retrieval list. The next step 302 is to switch the remultiplexer 102 off for the selected original PID value. When the remultiplexer is switched off for the original PID, in step 303, the demultiplexer 106 and the descrambler 104 (if the packets under the corresponding internal PID have been set for descrambling) are switched off for the internal PID corresponding to the original PID requested. Finally in step 304, the original PID number record is deleted from the PIDs database 113 containing the PID values currently being processed.

Fig. 4 shows the procedure for data processing when packets are received in the internal dTS 105 stream by the demultiplexer 106, which notifies the PID management module 115 about its receipt. The first step 401, executed by the demultiplexer 106, is to read the incoming packet from the internal dTS 105 stream, perform the necessary processing, store the data in the stream data buffers in the memory 114 and notify the PID management module 115. The new data notification is typically done by the demultiplexer 106 by invoking an interrupt and it typically contains information about the data source and the stored data. Next, in step 402, the reference PID for the notified internal PID value is searched for in the PIDs database 113 and if the original value is different from the internal PID value, the original value is restored. In the next step 403, the procedure finds the input transport stream TS 101, from which the received data originated and, based on that identification, the PID management module 115 determines the application interface 119 from which the data request originated. The last step 404 of the procedure is to actually inform, via the application interface 119, the application 120 for the reception of data for processing by the application. This is usually done by making a function call associated with a given original PID value. The called-up function is the function registered during the addition of an original PID packets reception request to the system, which has been delineated in detail in Fig. 2.

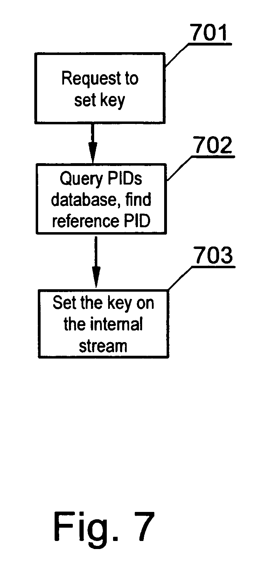

The records of the PID database 113 are also used to set up the descrambler as shown in Fig. 7. The procedure of the setup starts with the application request 701, via the application interface 119, to set a CA key on the descrambler for the original PID value. The value needs to be changed to the internal value by querying 702 the PIDs database 113. For example if the application requests to set key X on the de-scrambler for the original PID in a given input TS stream 101, the PID management module 115, after querying the PIDs database 113, sets key X 703 on the descrambler associated with the iTS internal stream 103 and the for the internal PID defined by the PIDs database 113 record.

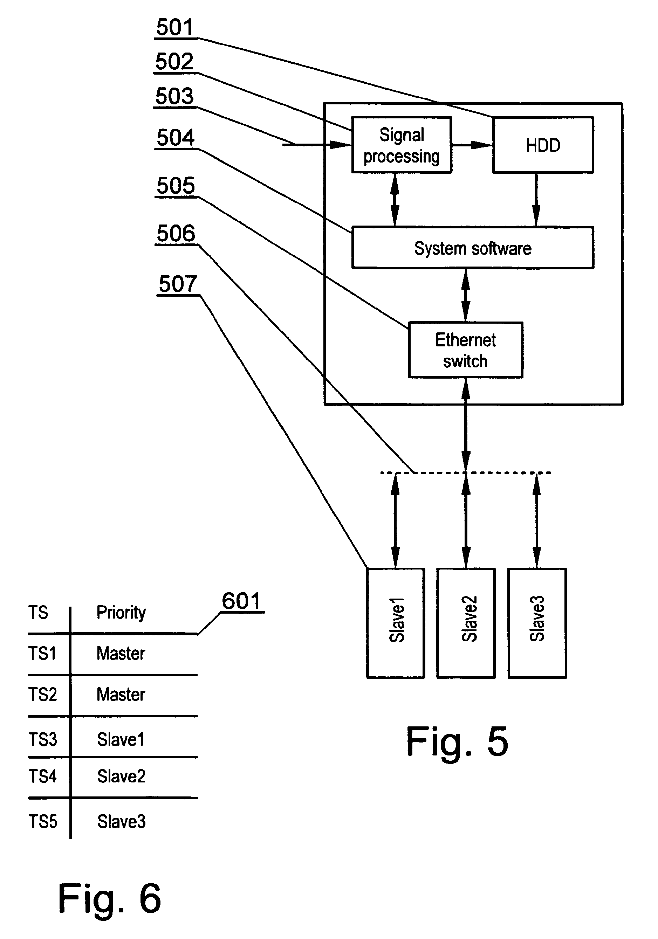

Fig. 5 shows typical, complete, video-distribution system architecture, which uses the stream-processing method according to the module shown in Fig. 1. In a system that, according to Fig. 1, comprises five front-ends and a processor capable of simultaneously processing three streams, for example three slave STBs (set-top box) 507 can be connected to the master STB system. The master decoder comprises the module 502 shown in Fig. 1, which processes data received from sources 503. The system also comprises a hard disk 501 in order to allow signal recording for all STBs in the system. The programs requested for recording by the slave STBs are stored in the master device and sent to slave STBs when playback is required. The master device is controlled by the software 504, which in the example communicates with the slave STBs via the Ethernet network 505, 506. The slave STBs also use this channel to, for example, request a channel change or program recording from the master STB system. Each slave STB is able to receive only the data it requests.

Fig. 6 shows an exemplary setup of resources allocation. It is a possible situation, where the four users' requests of the system shown in Fig. 5 are processed on a first-come-first-served basis. In such a case, when a request is received, which cannot be served immediately, to the user is shown a message that no resources are available at the moment. Another option, according to the table in Fig. 6, is to assign priorities to system front-ends. In this case the master has guaranteed access to the first and second front-end and each slave STB system is assigned one front-end. If only one slave decoder is in operation, it can utilize other unused front-ends (for example for recording whilst viewing another channel), however when STB, which has priority access to the front-end used by another STB is switched on, the user of the STB of the higher priority can decide whether to take control of the selected front-end. If the higher-priority STB user takes the control of a given resource, the other, lower-priority STB loses one data source i.e. might have to suspend active recording.

The present invention, therefore, is well adapted to carry out the objects and attain the ends and advantages mentioned. While the present invention has been depicted, described, and is defined by reference to particular preferred embodiments of the invention, such references in the foregoing specification do not imply a limitation on the invention. It will, however, be evident that various modifications and changes may be made thereto without departing from the broader scope of the invention. The presented preferred embodiments of the invention are exemplary only, and are not exhaustive of the scope of the invention. Consequently, the invention is intended to be limited only the spirit and scope of the appended claims.

## Claims

1. A system for processing of television data streams comprising front-ends for receiving at least two streams having original PID values, a remultiplexer for receiving the streams from the front-ends and capable of outputting a number of internal streams (103), and a descrambler for receiving the internal streams from the remultiplexer (102), where the number of the internal streams (103) is lower than a number of the input streams (101) **characterized in that** the internal streams (103) are provided with internal PID values and to the remultiplexer (102), the descrambler (104) and the demultiplexer (106) is connected a PID management module (115), to which is connected a PIDs database (113) for storing data about PIDs relation of the input streams (101) and the internal streams (103), and wherein the PID management module (115) is capable of restoring the internal PID values to the original PID values, basing on the data about the PIDs values relation, after data of the internal streams have been processed by the descrambler (104) and the demultiplexer (106).

2. The system for processing data, according to claim 1, **characterized in that** the PID management module (115) comprises means for receiving via a communication link (121) new data notification from the demultiplexer, means for accepting requests for reception of specific data from the input streams, means for executing the remultiplexer setup by applying the remapping parameters, means for executing the descrambler setup by applying the descrambling parameters, means for executing the demultiplexer setup by applying the demultiplexing parameters, and means for executing, after new data notification, the PIDs restoring in order to reply to requests for reception of specific data from the input streams.

3. The system for processing data, according to claim 1, **characterized in that** the PID management module (115) is a communication means between the demultiplexer (106) and descrambler (104) hardware operating on internal PIDs of the internal streams and the applications (120) operating on original PIDs values of the input streams.

4. The system for processing data, according to claim 1, **characterized in that** the PID management module (115) is bi-directionally connected to the PIDs database (113) and manages the PIDs database records.

5. The system for processing data, according to claim 1, **characterized in that** the PIDs database record comprises at least an original PID value related to the input stream, an internal PID value related to the internal stream, an input stream identifier and an internal stream identifier.

6. The system for processing data, according to claim 2, **characterized in that** means for executing the descrambler setup comprises means for mapping, according to the PIDs database, the selected PID value of the input stream to the internal PID value, used in the internal stream.

7. The system for processing data, according to claim 2, **characterized in that** the new data notification sent to the PID management module by the demultiplexer, comprises the internal PID value.

8. The system for processing data, according to claim 2, **characterized in that** the means for accepting requests for reception of specific data from the input streams are connected via the application interface (119) to the application layer (120).

9. The system for processing data, according to claim 2, **characterized in that** the remapping parameters comprise an input stream identifier, an original PID value, an internal stream and an internal PID value.

10. The system for processing data, according to claim 2, **characterized in that** the descrambling parameters comprise a descrambler key, an internal stream identifier and an internal PID value where the demultiplexing parameters are an internal stream identifier and an internal PID value.

11. A method for processing of television data streams in a device comprising front-ends receiving at least two streams comprising the steps of:
accepting requests for reception of specific data from input streams;
remultiplexing an input number of the input streams received from the front-ends into an output number of internal streams, where the output number is lower than the input number of the input streams received from the front-ends and executing necessary PIDs remapping;
storing data about PIDs relation between the input streams and the internal streams;
processing the internal streams in a descrambler and a demultiplexer capable of processing the output number of the input streams using a PID management module having access to the data about the PIDs values relation of the input streams to the internal streams; and
restoring PIDs values in order to reply to requests for reception of specific data from the input streams.

12. The method for processing data, according to claim 11, **characterized in that** PIDs relation is stored in a PIDs database where the PIDs database record is used to accept requests for reception of specific data from the input streams, remove of an original PID value from processing, process data when data are received in the internal stream from the demultiplexer, setup the demultiplexer, setup the descrambler and restore PIDs values.

13. The method for processing data, according to claim 12, **characterized in that** the PIDs database record comprises at least original PID value related to input stream, internal PID value related to internal stream, an input stream identifier and an internal stream identifier.

14. The method for processing data, according to claim 11, **characterized in that** the remultiplexer and PIDs remapping are controlled by a PID management module.

15. The method for processing data, according to claim 12, **characterized in that** the setup of the descrambler and the setup of the demultiplexer are executed after mapping the selected input stream identifier and the original PID value into the internal stream identifier and the internal PID value.

16. The method for processing data, according to claim 13, **characterized in that** accepting requests for reception of specific data from the input streams comprises the steps of:
checking whether the requested original PID value is currently present in the PIDs database whereas if the PID value record is already present, ending the procedure;
and when the requested original PID value is not currently present in the PIDs database
determining on which internal stream the system will await the requested data;
checking whether the original PID value requested is already present in the internal stream wherein if the value is not present in the internal stream, the database is updated with a new record where the internal PID value equals the original PID value;
and when the selected original PID value is present in the internal stream remapping PID value requested;
setting the remultiplexer for the remapping according to the found value; and
storing information about PIDs relation in the PIDs database.

17. The method for processing data, according to claim 13, **characterized in that** the removal of an original PID value from processing comprises the steps of:
requesting from the PID management module to remove the selected original PID value from data retrieval list and PIDs database;
switching the remultiplexer off for the selected original PID value; and
deleting the PID value record from the PIDs database.

18. The method for processing data, according to claim 13, **characterized in that** data processing when data are received in the internal stream from the demultiplexer comprises the steps of:
reading the incoming data;
searching for the PID reference in the PIDs database and in case the original PID value is different from the internal PID value searched for;
restoring the original PID value;
finding the input stream, from which the received data has been read; and
passing the data to the selected application interface for further processing.

19. The method for processing data, according to claim 13, **characterized in that** the descrambler setup comprises the steps of:
requesting to set key on the descrambler for the original PID value in the input stream;
querying the PIDs database;
setting the key on the descrambler associated with the internal stream for the internal PID value defined by the PIDs database record.

20. The method for processing data, according to claim 14, **characterized in that** the restoring of PIDs values is followed by extracting descrambling keys for the internal data streams.

## Patentansprüche

1. System zur Verarbeitung von Fernseh-Datenströmen, umfassend Nutzergeräte, um wenigstens zwei Ströme mit ursprünglichen PID-Werten zu empfangen, einen Remultiplexer, um die Ströme von den Nutzergeräten zu empfangen und der geeignet ist, eine Anzahl interner Ströme (103) abzugeben, und einen Descrambler zum Empfangen der internen Ströme von dem Remultiplexer (102), wobei die Anzahl der internen Ströme (103) geringer ist als eine Anzahl der Eingangsströme (101), **dadurch gekennzeichnet, dass** die internen Ströme (103) mit internen PID-Werten versehen sind und an den Remultiplexer (102), den Descrambler (104) und den Demultiplexer (106) ein PID-Verwaltungsmodul (115) angeschlossen ist, das mit einer PID-Datenbank (113) verbunden ist, um Daten über die PID-Beziehung der Eingangsströme (101) und der internen Ströme (103) zu speichern, wobei das PID-Verwaltungsmodul (115) fähig ist, die internen PID-Werte zu den ursprünglichen PID-Werten wiederherzustellen, basierend auf den Daten über die PID-Wertebeziehung, nachdem Daten der internen Ströme vom Descrambler (104) und Demultiplexer (106) verarbeitet worden sind.

2. System zur Datenverarbeitung nach Anspruch 1, **dadurch gekennzeichnet, dass** das PID-Verwaltungsmodul (115) Mittel zum Empfangen neuer Datenmeldungen vom Demultiplexer über eine Kommunikationsverbindung (121) umfasst, sowie Mittel zum Annehmen von Anforderungen zum Empfang von spezifischen Daten von den Eingangsströmen, Mittel für die Durchführung der Remultiplexer-Einstellung durch die Anwendung von Remapping-Parametern, Mittel für die Durchführung der Descrambler-Einstellung durch die Anwendung von Descrambling-Parametern, Mittel für die Durchführung der Demultiplexer-Einstellung durch die Anwendung von Demultiplex-Parametern, und Mittel für die Durchführung der PID-Wiederherstellung nach neuer Datenmeldung, um auf Anforderungen zum Empfang von spezifischen Daten von den Eingangsströmen zu antworten.

3. System zur Datenverarbeitung nach Anspruch 1, **dadurch gekennzeichnet, dass** das PID-Verwaltungsmodul (115) eine Kommunikationseinrichtung zwischen dem Demultiplexer (106) und dem Descrambler (104) ist, deren Hardware mit internen PID-Werten der internen Ströme arbeitet und die Anwendungen (120) mit ursprünglichen PID-Werten der Eingangsströme betrieben sind.

4. System zur Datenverarbeitung nach Anspruch 1, **dadurch gekennzeichnet, dass** das PID-Verwaltungsmodul (115) mit der PID-Datenbank (113) bidirektional verbunden ist und die PID-Datenbank-Aufzeichnungen verwaltet.

5. System zur Datenverarbeitung nach Anspruch 1, **dadurch gekennzeichnet, dass** die PID-Datenbank-Aufzeichnung mindestens einen ursprünglichen PID-Wert, der auf den Eingangsstrom bezogen ist, einen internen PID-Wert, der auf den internen Strom bezogen ist, sowie einen Eingangsstrom-Identifizierer und einen internen Strom-Identifizierer umfasst.

6. System zur Datenverarbeitung nach Anspruch 2, **dadurch gekennzeichnet, dass** Mittel für die Durchführung der Descrambler-Einstellung entsprechend der PID-Datenbank Abbildungsmittel für den gewählten PID-Wert des Eingangsstroms zu dem im internen Strom verwendeten, internen PID-Wert umfassen.

7. System zur Datenverarbeitung nach Anspruch 2, **dadurch gekennzeichnet, dass** die Neudaten-Meldung, die vom Demultiplexer zum PID-Verwaltungsmodul gesandt wird, den internen PID-Wert umfasst.

8. System zur Datenverarbeitung nach Anspruch 2, **dadurch gekennzeichnet, dass** die Mittel für das Annehmen von Anforderungen zum Empfang von spezifischen Daten von den Eingangsströmen über die Anwendungs-Schnittstelle (119) an die Anwendungsebene (120) angeschlossen sind.

9. System zur Datenverarbeitung nach Anspruch 2, **dadurch gekennzeichnet, dass** die Remapping-Parameter einen Eingangsstrom-Identifizierer, einen ursprünglichen PID-Wert, einen internen Strom und einen internen PID-Wert umfassen.

10. System zur Datenverarbeitung nach Anspruch 2, **dadurch gekennzeichnet, dass** die Descrambling-Parameter eine Descrambler-Verschlüsselung, einen internen Strom-Identifizierer und einen internen PID-Wert umfassen, wobei die Demultiplex-Parameter ein interner Strom-Identifizierer und ein interner PID-Wert sind.

11. Verfahren zur Verarbeitung von Fernseh-Datenströmen in einer Vorrichtung mit Nutzergeräten, die mindestens zwei Ströme empfangen, umfassend die Schritte:
Annehmen von Anforderungen zum Empfang von spezifischen Daten von Eingangsströmen;
Remultiplexen einer Eingangs-Anzahl der von den Nutzergeräten empfangenen Eingangsströme in eine Ausgangs-Anzahl von internen Strömen, wobei die Ausgangs-Anzahl geringer ist als die Eingangs-Anzahl der von den Nutzergeräten empfangenen Eingangsströme, und Durchführung von notwendigem PID-Remapping;
Speichern von Daten über PID-Beziehungen zwischen den Eingangsströmen und den internen Strömen;
Verarbeiten der internen Ströme in einem Descrambler und einem Demultiplexer, der zum Bearbeiten der Ausgangs-Anzahl der Eingangsströme unter Verwendung eines PID-Verwaltungsmoduls mit Zugriff zu den Daten über die PID-Werte-Beziehungen der Eingangsströme zu den internen Strömen fähig ist; und
Wiederherstellen von PID-Werten, um Anforderungen zum Empfang von spezifischen Daten von den Eingangsströmen zu beantworten.

12. Verfahren zur Datenverarbeitung nach Anspruch 11, **dadurch gekennzeichnet, dass** PID-Beziehungen in einer PID-Datenbank gespeichert werden, in der die PID-Datenbank-Aufzeichnung verwendet wird, um Anforderungen zum Empfang von spezifischen Daten von den Eingangsströmen anzunehmen, einen ursprünglichen PID-Wert von der Verarbeitung zu entfernen, Daten zu verarbeiten, wenn im internen Strom Daten vom Demultiplexer empfangen werden, den Demultiplexer und den Descrambler einzustellen, sowie PID-Werte wiederherzustellen.

13. Verfahren zur Datenverarbeitung nach Anspruch 12, **dadurch gekennzeichnet, dass** die PID-Datenbank-Aufzeichnung mindestens den ursprünglichen PID-Wert mit Bezug zum Eingangsstrom, den internen PID-Wert mit Bezug zum internen Strom, einen Eingangsstrom-Identifizierer und einen internen Strom-Identifizierer umfasst.

14. Verfahren zur Datenverarbeitung nach Anspruch 11, **dadurch gekennzeichnet, dass** der Remultiplexer und das PID-Remapping durch ein PID-Verwaltungsmodul gesteuert werden.

15. Verfahren zur Datenverarbeitung nach Anspruch 12, **dadurch gekennzeichnet, dass** die Einstellung des Descramblers und des Demultiplexers nach Abbildung des gewählten Eingangsstrom-Identifizierers und des ursprünglichen PID-Werts in den internen Strom-Identifizierer und den internen PID-Wert durchgeführt werden.

16. Verfahren zur Datenverarbeitung nach Anspruch 13, **dadurch gekennzeichnet, dass** die Annahme von Anforderungen zum Empfang von spezifischen Daten von den Eingangsströmen die Schritte umfasst:
Überprüfen, ob der angeforderte, ursprüngliche PID-Wert bereits in der PID-Datenbank vorliegt, wobei bei Vorliegen der PID-Wert-Aufzeichnung das Verfahren beendet wird;
und bei Nicht-Vorliegen des angeforderten, ursprünglichen PID-Werts bestimmt wird;
auf welchem internen Strom das System die angeforderten Daten erwartet;
Überprüfen, ob der angeforderte, ursprüngliche PID-Wert bereits im internen Strom vorliegt, wobei die Datenbank mit einem neuen Datensatz aktualisiert wird, in dem der interne PID-Wert dem ursprünglichen PID-Wert entspricht, wenn der Wert nicht im internen Strom vorliegt;
und falls der gewählte, ursprüngliche PID-Wert im internen Strom vorliegt, ein Remapping des PID-Werts angefordert wird;
Einstellen des Remultiplexers für das Remapping gemäss dem gefundenen Wert; und
Speichern von Information über PID-Beziehungen in der PID-Datenbank.

17. Verfahren zur Datenverarbeitung nach Anspruch 13, **dadurch gekennzeichnet, dass** die Entfernung eines ursprünglichen PID-Werts aus der Verarbeitung die Schritte umfasst: Anfordern vom PID-Verwaltungsmodul, den gewählten, ursprünglichen PID-Wert aus der Daten-Wiedergewinnungsliste und der PID-Datenbank zu entfernen;
Ausschalten des Remultiplexers für den gewählten, ursprünglichen PID-Wert; und Löschen der PID-Wert-Aufzeichnung aus der PID-Datenbank.

18. Verfahren zur Datenverarbeitung nach Anspruch 13, **dadurch gekennzeichnet, dass** die Datenverarbeitung beim Empfang von Daten im internen Strom vom Demultiplexer die Schritte umfasst:
Lesen der ankommenden Daten;
Suchen der PID-Bezugnahme in der PID-Datenbank und falls der ursprüngliche PID-Wert zum internen, gesuchten PID-Wert unterschiedlich ist;
Wiederherstellen des ursprünglichen PID-Werts;
Auffinden des Eingangsstroms, von dem die empfangenen Daten gelesen wurden; und
Weiterleiten der Daten zur gewählten Anwendungsschnittstelle zur weiteren Verarbeitung.

19. Verfahren zur Datenverarbeitung nach Anspruch 13, **dadurch gekennzeichnet, dass** die Descrambler-Einstellung die Schritte umfasst:
Anfordern der Verschlüsselungseinstellung auf dem Descrambler für den ursprünglichen PID-Wert im Eingangsstrom;
Abfragen der PID-Datenbank;
Einstellung der Verschlüsselung auf dem Descrambler im Zusammenhang mit dem internen Strom für den internen PID-Wert, der durch die PID-Datenbank-Aufzeichnung definiert ist.

20. Verfahren zur Datenverarbeitung nach Anspruch 14, **dadurch gekennzeichnet, dass** das Wiederherstellen der PID-Werte gefolgt wird vom Extrahieren der Descrambling-Verschlüsselung für die internen Datenströme.

## Revendications

1. Système de traitement de courants de données pour télévision, comprenant des front-ends pour la réception d'au moins deux courants ayant des valeurs PID initiales, un remultiplexeur pour recevoir les courants des front-ends et capable de produire un certain nombre de courants internes (103), et un désembrouilleur pour recevoir les courants internes du remultiplexeur (102), où le nombre de courants internes (103) est inférieur au nombre de courants d'entrée (101), **caractérisé en ce que** les courants internes (103) sont munis de valeurs PID internes et que le remultiplexeur (102), le désembrouilleur (104) et le démultiplexeur (106) sont connectés au module de traitement PID (115), auquel est connectée la banque de données PID (113) pour stocker les données concernant la relation PID des courant d'entrée (101) et des courants internes (103), et où le module de traitement PID (115) est capable de restaurer les valeurs PID internes aux valeurs PID initiales, sur base des données concernant la relation des données PID, après que els données des courants internes ont été traitées par le désembrouilleur (104) et le démultiplexeur (106).

2. Système de traitement des données selon la revendication 1, **caractérisé en ce que** le module de traitement PID (115) comprend des moyens pour réceptionner via un lien de communication (121), la notification de nouvelles données depuis le démultiplexeur, des moyens pour accepter les requêtes de réception de données spécifiques depuis les courants d'entrée, des moyens pour exécuter la configuration du remultiplexeur en appliquant les paramètres de remapping, des moyens pour exécuter la configuration du démultiplexeur en appliquant les paramètres de démultiplexage, et des moyens pour exécuter, après notification de nouvelles données, la restauration PID pour répondre aux requêtes de réception de données spécifiques depuis les courants d'entrées.

3. Système de traitement des données selon la revendication 1, **caractérisé en ce que** le module de traitement PID (115) est un moyen de communication entre le démultiplexeur (106) et le désembrouilleur (104) fonctionnant sur les PID internes des courants internes et les applications (120) fonctionnant sur les valeurs PID initiales des courants d'entrée.

4. Système de traitement des données selon la revendication 1, **caractérisé en ce que** le module de traitement PID (115) est connecté de manière bidirectionnelle à la banque de données PID (113) et gère les enregistrements de la banque de données PID.

5. Système de traitement des données selon la revendication 1, **caractérisé en ce que** l'enregistrement de la banque de données PID comprend au moins une valeur PID initiale reliée au courant d'entrée, une valeur PID interne reliée au courant interne, un identifiant de courant d'entrée et un identifiant de courant interne.

6. Système de traitement des données selon la revendication 2, **caractérisé en ce que** les moyens pour exécuter la configuration du remultiplexeur comprennent des moyens pour effectuer le mapping, selon la banque de données PID, la valeur PID sélectionnée du courant d'entrée à la valeur PID interne, utilisée dans le courant interne.

7. Système de traitement des données selon la revendication 2, **caractérisé en ce que** la notification de nouvelles données envoyée au module de traitement PID par le démultiplexeur, comprend la valeur PID interne.

8. Système de traitement des données selon la revendication 2, **caractérisé en ce que** les moyens pour accepter les requêtes pour la réception de données spécifiques depuis les courants d'entrée sont connectés via une interface d'application (119) à la couche d'application (120).

9. Système de traitement des données selon la revendication 2, **caractérisé en ce que** les paramètres de remapping comprennent un identifiant de courant d'entrée, une valeur PID initiale, un courant interne et une valeur PID interne.

10. Système de traitement des données selon la revendication 2, **caractérisé en ce que** les paramètres de conversion comprennent une clé de conversion, un identifiant de courant interne et une valeur PID interne, où les paramètres de démultiplexage sont un identifiant de courant interne et une valeur PID interne.

11. Procédé de traitement de courants de données pour la télévision, dans un dispositif comprenant des front-ends recevant au moins deux courants, comprenant els étapes consistant à:
accepter les requêtes pour la réception de données spécifiques depuis les courants d'entrée;
remultiplexer un nombre d'entrée des courants d'entrée reçus des front-ends en un nombre de sortie de courants internes, où le nombre de sortie est inférieur au nombre d'entrée des courants d'entrée reçus des front-ends et exécuter le remapping nécessaire des PID;
stocker les données sur la relation des PID entre les courants d'entrée et les courants internes;
traiter le nombre de sortie des courants d'entrée en utilisant un module de traitement PID ayant accès aux données concernant la relation des valeurs de PID des courants d'entrée aux courants internes; et
restaurer les valeurs de PID afin de répondre aux requêtes pour la réception de données spécifiques depuis les courants d'entrée.

12. Procédé de traitement de données selon la revendication 11, **caractérisé en ce que** la relation des PID est stockée dans une banque de données de PID, où l'enregistrement de la banque de données de PID est utilisé pour accepter les requêtes pour la réception de données spécifiques depuis les courants d'entrée.

13. Procédé de traitement de données selon la revendication 12, **caractérisé en ce que** l'enregistrement de la banque de données de PID comprend au moins la valeur PID initiale reliée au courant d'entrée, la valeur PID interne reliée au courant interne, un identifiant de courant d'entrée et un identifiant de courant interne.

14. Procédé de traitement de données selon la revendication 11, **caractérisé en ce que** le remultiplexeur et le remapping de PID sont contrôlés par un module de traitement de PID.

15. Procédé de traitement de données selon la revendication 12, **caractérisé en ce que** la configuration du désembrouilleur et la configuration du démultiplexeur sont réalisées après mapping de l'identifiant sélectionné du courant d'entrée et de la valeur PID initiale en l'identifiant de courant interne et la valeur PID interne.

16. Procédé de traitement de données selon la revendication 13, **caractérisé en ce que** l'acceptation des requêtes pour la réception de données spécifiques depuis les courants d'entrée comprend les étapes consistant à:
contrôler si la valeur PID initiale exigée est actuellement présente dans la banque de données de PID, alors que si l'enregistrement de la valeur PID est déjà présent, fin de la procédure;
et si la valeur PID initiale exigée n'est pas présente dans la banque de données de PID;
déterminer sur quel courant interne le système va attendre les données exigées;
contrôler si la valeur PID initiale exigée est déjà présente dans le courant interne, où si la valeur n'est pas présente dans le courant interne, la banque de données est mise à jour avec un nouvel enregistrement où la valeur PID interne est égale à la valeur PID initiale;
et lorsque la valeur PID initiale sélectionnée est présente dans le courant interne, remapping de la valeur PID exigée;
configuration du remultiplexeur pour le remapping selon la valeur trouvée; et
enregistrement de l'information concernant la relation des PID dans la banque de données de PID.

17. Procédé de traitement de données selon la revendication 13, **caractérisé en ce que** l'élimination d'une valeur PID initiale du traitement comprend les étapes consistant à:
interroger le module de traitement des PID pour éliminer la valeur PID initiale sélectionnée de la liste de recherche de données et de la banque de données de PID;
commuter off le remultiplexeur pour la valeur PID initiale sélectionnée; et
effacer l'enregistrement de la valeur PID de la banque de données de PID.

18. Procédé de traitement de données selon la revendication 13, **caractérisé en ce que** le traitement des données lorsque des données sont reçues du démultiplexeur dans le courant interne, comprend les étapes consistant à:
lire les données entrantes;
rechercher la référence PID dans la banque de données de PID et si la valeur PID initiale est différente de la valeur PID interne recherchée;
restaurer la valeur PID initiale;
trouver le courant d'entrée, dans lequel les données reçues ont été lues; et
passer les données dans l'interface d'application choisie pour traitement ultérieur.

19. Procédé de traitement de données selon la revendication 13, **caractérisé en ce que** la configuration du désembrouilleur comprend les étapes consistant à:
demander de mettre une clé sur le désembrouilleur pour la valeur PID initiale dans le courant d'entrée;
interroger la banque de données de PID;
mettre la clé sur le désembrouilleur, associée au courant interne pour la valeur PID interne définie par l'enregistrement de la banque de données de PID.

20. Procédé de traitement de données selon la revendication 14, **caractérisé en ce que** la restauration des valeurs PID est suivie de l'extraction des clés de désembrouilleur pour les courants internes de données.
